# EUROPEAN PATENT APPLICATION

(11) **EP 2 405 175 A1**
(43) Date of publication of application: **11.01.2012**
(21) Application number: 10168933.9
(22) Date of filing: 08.07.2010
(51) Int. Cl.: F16M 11/10, F16M 13/02

(54) **Display hanging structure**

(71) Applicant: Top Victory Investments Ltd., Harbour City, Hong Kong (CN)
(72) Inventor: Xue, Embay, Zhonghe City Taipei County (TW)
(74) Representative: Chaillot, Geneviève

(57) **Abstract**

The present invention is related to a display hanging structure which is for hanging a display on the wall. The display (91) has a rear portion, and the display hanging structure comprises at least two hangers (11), a shaft (12) and at least one fixing block (13). The hangers are disposed at rear portion and each hanger has a hole (111) disposing at identical altitude comparative to the other hole (111). The shaft (12) is axial shaped which is disposed in the holes. The fixing block (13) is disposed on the wall and contains a slot (131) for receiving the shaft. Whereby, the display may be firmly stuck on the wall by means of placing the shaft in the slots.

## Description

### FIELD OF THE INVENTION

The present invention relates to a hanging structure, particularly to a thin type display hanging structure.

### DESCRIPTION OF THE PRIOR ART

In recent year, due to the lower and lower manufacturing cost, the flat panel display serving as TV or computer screen had become a mainstream for years. Moreover, because of its weightless and thin character comparative to the cathode-ray tube (CRT) TV, the flat panel display had also come into vogue in such as station, hospital, convenience store, theater or other public places. The flat panel display is used in public not only for presenting the message, but also for advertising purpose. Thus, the business application of the flat panel display is absolutely broader and broader.

Conventionally, when hung on the wall, the flat panel display normally takes advantage of a frame or other supporting structures, so that the flat panel display may be stuck and fixed on the wall by means of the mechanical structure of the frame, and then kept a distance away from the wall. Therefore, the distance between the wall and the flat panel display could be used for plugging the wires or cables.

However, the frame or supporting structure is normally thick so as to sustain the heavy flat panel display, and therefore it would looks bulky, massive and space-wasted. Furthermore, some sold frame or supporting structure of the display is troublesome for installing or disassembling; namely, the flat panel display needs to be entirely lifted and then the wires or cables might have chance to be plugged or removed. It would be absolutely inconvenient.

Therefore, how to resolve the shortcomings of thick and bulky frame, improving regulation of the flat panel display and plug or remove of the wires and cables, is remain a critical issue needed to be settled.

### SUMMARY OF THE INVENTION

The primary object of present invention is to resolve the shortcomings of thick and bulky frame of display.

The other object of present invention is to improve regulation of the display and plug or remove of the wires and cables.

To achieve the foregoing and other objects, a display hanging structure for hanging a display on the wall is provided. The display has a rear portion, and the display hanging structure comprises at least two hangers, a shaft and at least one fixing block. The hangers are disposed at rear portion and each hanger has a hole disposing at identical altitude comparative to the other hole. The shaft is axial shaped which is disposed in the holes. The fixing block is disposed on the wall and contains a slot for receiving the shaft. Whereby, the display may be firmly stuck on the wall by means of placing the shaft in the slots.

In one preferable embodiment of display hanging structure, wherein the hanger is fixed on the rear portion of the display by means of screws or hooks.

In another embodiment of display hanging structure, wherein the hangers are disposed at identical altitude.

In another embodiment of display hanging structure, wherein the shaft is tightly fitted in the holes.

In another embodiment of display hanging structure, wherein the shaft is tightly fitted in the slot.

In another embodiment of display hanging structure, wherein the fixing block further contains at least one flexible hook disposing nearby the slot, wherein the hook might prevent the shaft from radial moving when the shaft is disposed in the slot, and wherein the hook abuts upon the shaft when the shaft is disposed in the slot.

In another embodiment of display hanging structure, wherein two ends of the slot along the direction of axis of the shaft are at identical altitude.

In another embodiment of display hanging structure, wherein the number of fixing blocks is plurality and the pluralities of slots are at identical altitude.

In another embodiment of display hanging structure, further comprising at least one spacer disposed at the rear portion and beneath of the hanger; wherein the thickness of the spacer and the thickness of the hanger are the same, wherein the spacer is firmly fixed at the rear portion by means of a screw, wherein the spacer further contains a bracket rotating around the spacer, and the bracket is parallels to or perpendicular to the rear portion by means of rotation.

In another embodiment of display hanging structure, further comprising at least one spacer disposed on the wall and beneath of the fixing block, wherein the thickness of the spacer and the thickness of the fixing block are the same, wherein the spacer is firmly fixed on the wall by means of a screw, wherein the spacer further contains a bracket rotating around the spacer, and the bracket is parallels to or perpendicular to the wall by means of rotation.

In another embodiment of display hanging structure, wherein the fixing block is firmly fixed on the wall by means of a screw.

Whereby, the display hanging structure might resolve the shortcomings of thick and bulky frame of display. Moreover, it may improve regulation of the display and meliorate plug or remove of wires and cables.

The foregoing, as well as additional objects, features and advantages of the invention will be more readily apparent from the following detailed description, which proceeds with reference to the accompanying drawings.

### BRIEF DESCRIPTION OF THE DRAWINGS

Fig. 1A is diagram of display hanging structure according to the first embodiment of present invention;
Fig. 1B is diagram depicting the display hanging structure hung on the wall;
Fig. 1C is diagram depicting the display hanging structure hung tilted on the wall;
Fig. 1D is diagram of hanger, shaft, fixing block and spacer of the display hanging structure;
Fig.2 is diagram of display hanging structure according to the second embodiment of present invention;
Fig.3 is diagram of hanger, shaft and fixing block according to the third embodiment of present invention;
Fig. 4A is diagram of display hanging structure according to the fourth embodiment of present invention;
Fig. 4B is side-view diagram of display hanging structure according to the fourth embodiment of present invention.

### DESCRIPTION OF THE PREFERRED EMBODIMENTS

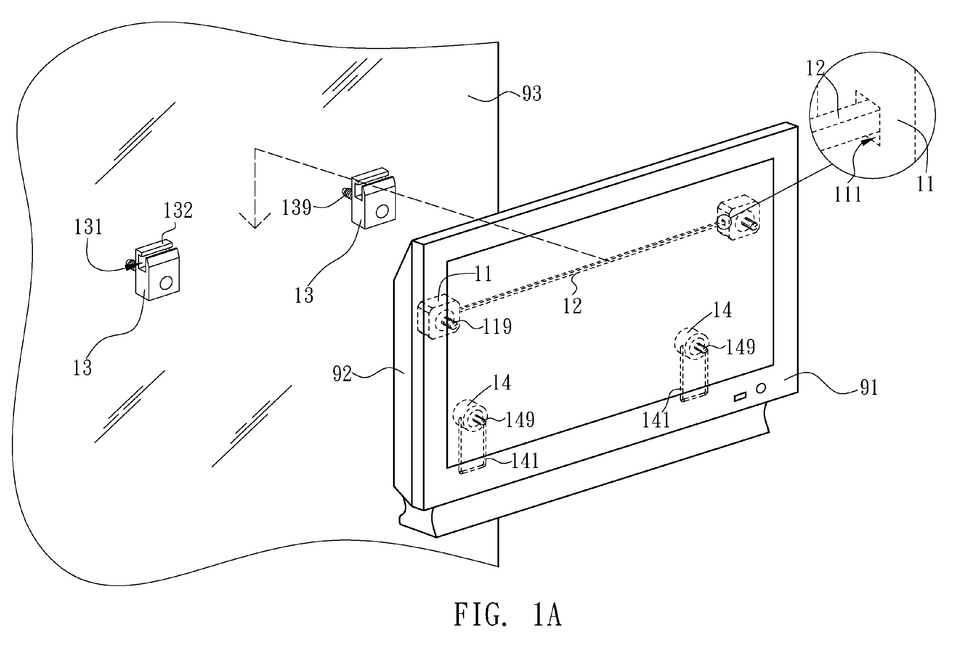

Please refer to Fig. 1A, Fig. 1A is diagram of display hanging structure according to the first embodiment of present invention. As shown in Fig. 1A, a display hanging structure is used for hanging a display 91 on the wall 93. The display 91 includes a rear portion 92. The display 91 is hung on the wall 93 by means of fixing the rear portion 92 on the wall 93 and letting the display 91 face to opposite of the wall 93. The display hanging structure contains two hangers 11, a shaft 12, two fixing blocks 13 and two spacers 14. Two hangers 11 are firmly fixed and disposed at rear portion 92 of the display 91, and kept at the same altitude. Configuration of the shaft 12 is long axial-shaped. As shown in enlarged diagram of Fig. 1A, each hanger 11 contains a hole 111, and then the shaft 12 is disposed in the hole 111. In preferable embodiment, the shaft 12 is inserted into the hole 111 by means of tightly fitted in the hole 111. If so, the shaft 12 will not be swung any more. Additionally, in this embodiment, the pluralities of holes 111 are also at identical altitude so that two ends of the shaft 12 may be horizontal disposed at rear portion 92 of the display 91 by means of placing the shaft 12 in the hole 111. At the back beneath of the display 91, two spacers 14 are firmly fixed and screwed on the rear portion 92 by means of the screw 149. Two spacers 14 are disposed beneath the hanger 11. Each spacer 14 contains a bracket 141 and the bracket 141 rotates around the spacer 14. Thus the bracket 141 can be parallels to or perpendicular to the rear portion 92 by means of rotation. Additionally, the hanger 11 is also firmly fixed and screwed at the rear portion 92 of the display 91 by taking advantage of the screw 119. Besides, those skilled in the art might replace the screw with hook; namely, the hanger 11 might be fixed at the rear portion 92 by taking advantage of the hook (not shown).

Two fixing blocks 13 are firmly fixed and screwed on the wall 93 by means of the screw 139. Each fixing block 13 contains a slot 131 and a hook 132. The slot 131 might receive the shaft 12; the hook 132 could have flexibility and is disposed near the slot 131. The slots 131 of two fixing blocks 13 are disposed at identical altitude. In this embodiment, the hook 132 is disposed near the opening of the slot 131 and approximately encircles the slot 131.

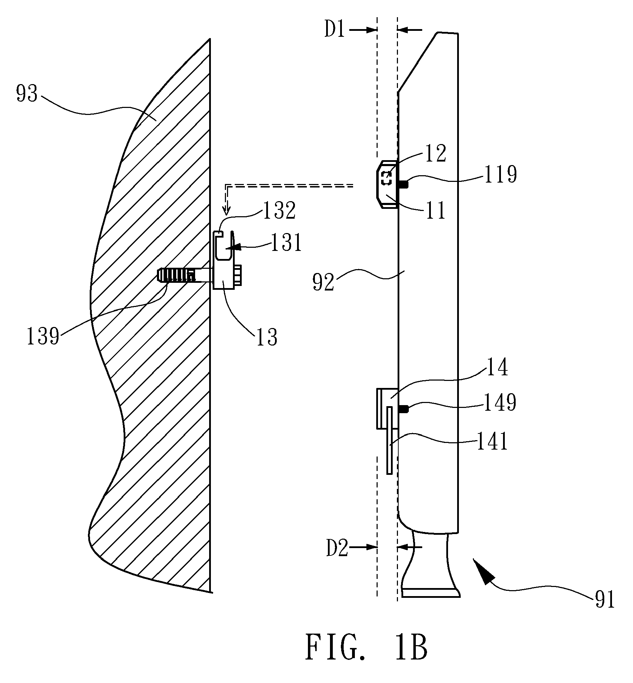

Next, please refer to Fig. 1A and Fig. 1B, Fig. 1B is diagram depicting the display hanging structure hung on the wall. As shown in Fig. 1B, when hanging the display 91 on the wall 93 is needed, the process is: aligning the rear portion 92 of the display 91 to the top of two fixing blocks 13, and moving the display 91 downward vertically. Then, the shaft 12 may pass through hooks 132 of two fixing blocks 13, so that the shaft 12 may enter the slots 131. In preferable case, the hooks 132 could have flexibility so as to let the shaft 12 easily pass through the hook 132, by means of swing the hooks 132. When the shaft 12 is located in the slot 131, the hook 132 may prevent the shaft 12 from moving at radial direction. Namely, the hook 132 could resist the vertical movement of the shaft 12 and the display 91, in case the display 91 might falls down due to external shaking. Moreover, the thickness D1 of the hanger 11 is equal to the thickness D2 of the spacer 14. Thus, the display 91 may be held vertically without tilted when hung on the wall 93. Meanwhile, the bracket 141 is parallel to the rear portion 92 of the display 91. Then, due to the thin enough hanger 11 and spacer 14, where the thickness D1 of hanger 11 and the thickness D2 of spacer 14 are nothing more than several centimeters, the display 91 might close to the wall 93 as far as possible. It would achieve thin-type, with graceful, and thus save space. Therefore, the display 91 might be firmly stuck on the wall 93 by means of disposing the shaft 12 inside the slots 131.

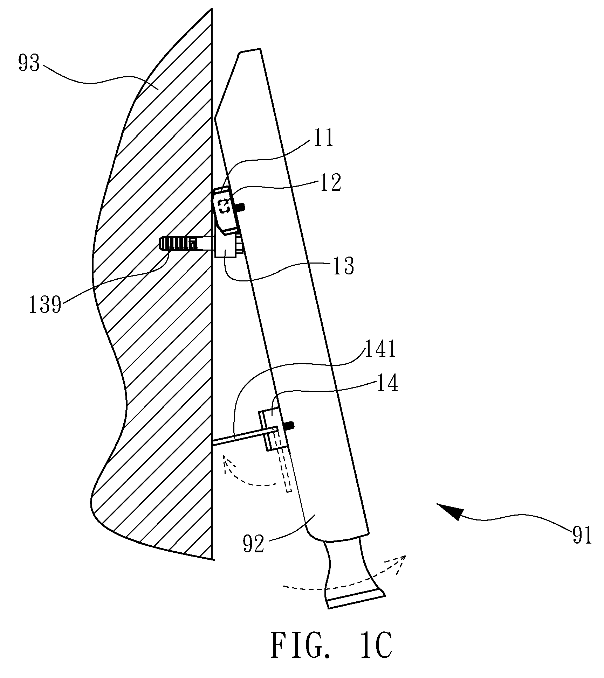

Please refer to Fig. 1C, Fig. 1C is diagram depicting the display hanging structure hung tilted on the wall. If removing plug (not shown) from the rear portion 92 is needed, what needs to do is: counterclockwise rotating the display 91 against the shaft 12, clockwise rotating the bracket 141 against the spacer 14 until the bracket 141 is perpendicular to the rear portion 92. And then the bracket 141 as a result can abut upon the wall 93. As shown in Fig. 1C, a space is presented between the rear portion 92 and the wall 93, which might allow the remove or plug of wires and cables located behind the display 91. When finishing the remove and plug, the bracket 141 could be rotated counterclockwise, so that the bracket 141 is parallel to the rear portion 92 again, and thus the display 91 could be returned to vertical state without tilted.

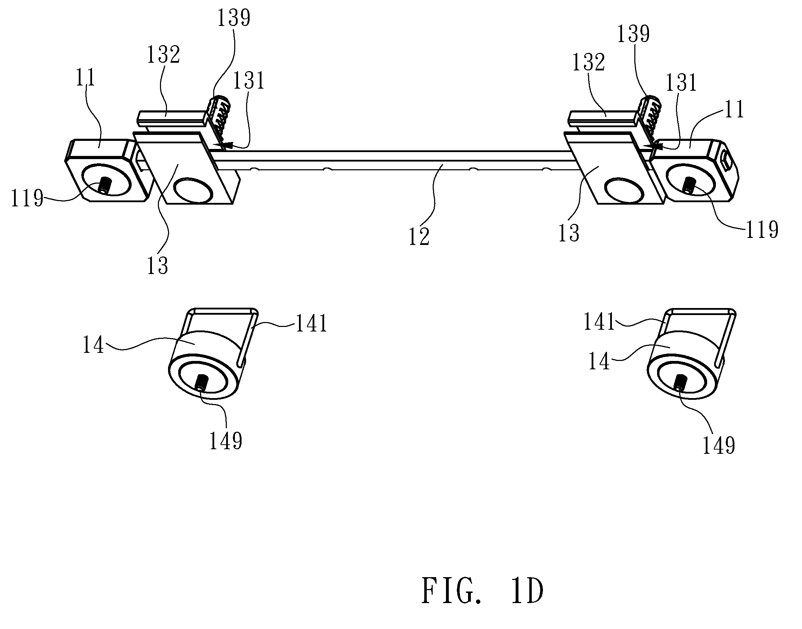

Please refer to Fig. 1D, Fig. 1D is diagram of hanger, shaft, fixing block and spacer of the display hanging structure. As shown in Fig. 1D, it is clearer disclosed about the configuration of the hanger 11, shaft 12, fixing block 13 and spacer 14. When the shaft 12 is disposed inside the slots 131 of the fixing blocks 13, two hangers 11 are located at outside of two fixing blocks 13.

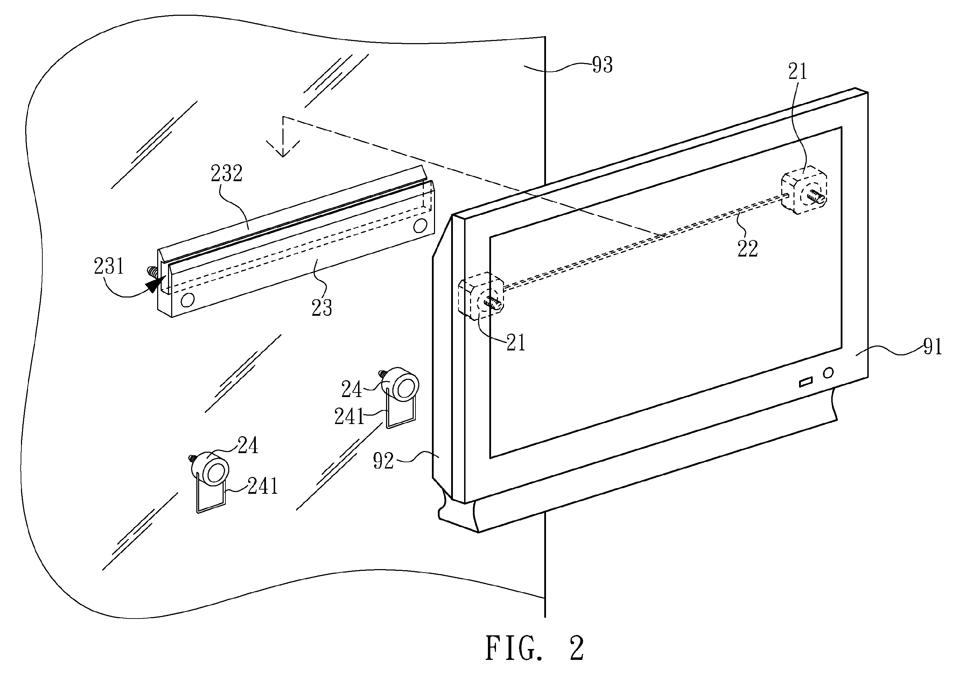

Next, another embodiment is introduced. Please refer to Fig.2, Fig.2 is diagram of display hanging structure according to the second embodiment of present invention. As shown in Fig.2, the display hanging structure includes two hangers 21, a shaft 22, a fixing block 23 and two spacers 24. Each spacer 24 contains a bracket 241. The fixing block 23 is a long-shaped structure, so that the hook 232 and the slot 231 are also long-shaped structures. In addition, two ends of the slot 231 along the direction of axis of the shaft 22 are at identical altitude. As a result, when the display 91 is hung by means of hanging the shaft 22 inside the slot 231, the display 91 might be stay in exact horizontal level.

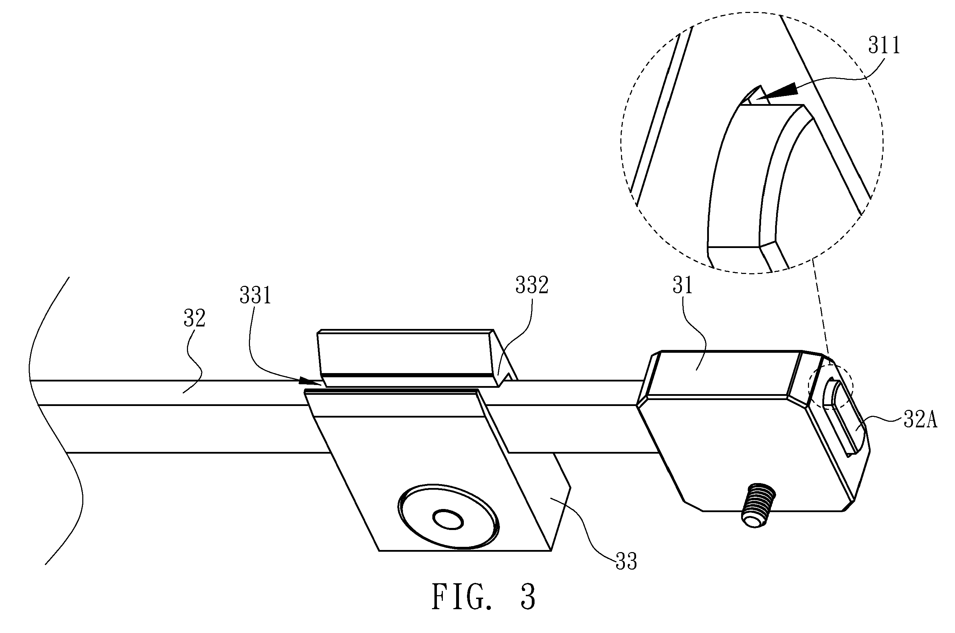

Please refer to Fig.3, Fig.3 is diagram of hanger, shaft and fixing block according to the third embodiment of present invention. As shown in Fig.3, when the shaft 32 is disposed inside the slot 331 of the fixing block 33, the shaft 32 is tightly fitted to the slot 331 and abutted upon by the hook 332, so that the combination strength of configuration is reinforced and thus the shaft 32 will not swing. Furthermore, as shown in enlarged diagram of Fig.3, the hole 311 penetrates the hanger 31, and thus the end 32A of the shaft 32 may be disposed in the hole 311 by passing through the hole 311. In preferable embodiment, the shaft 32 is tightly fitted to the hole 311, so that the shaft 32 will not horizontally move against the hanger 31.

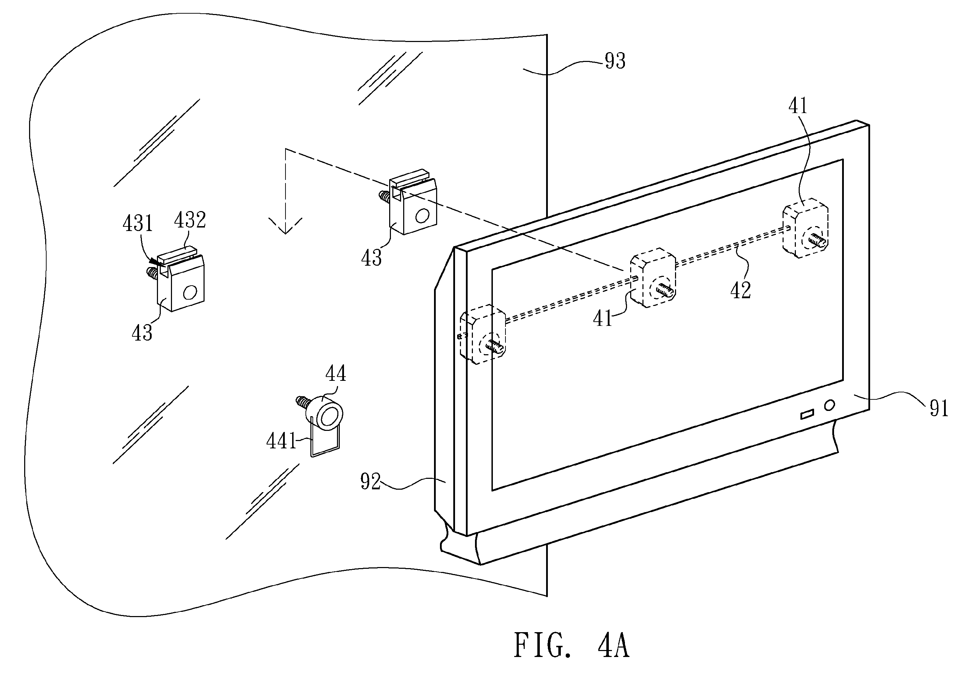

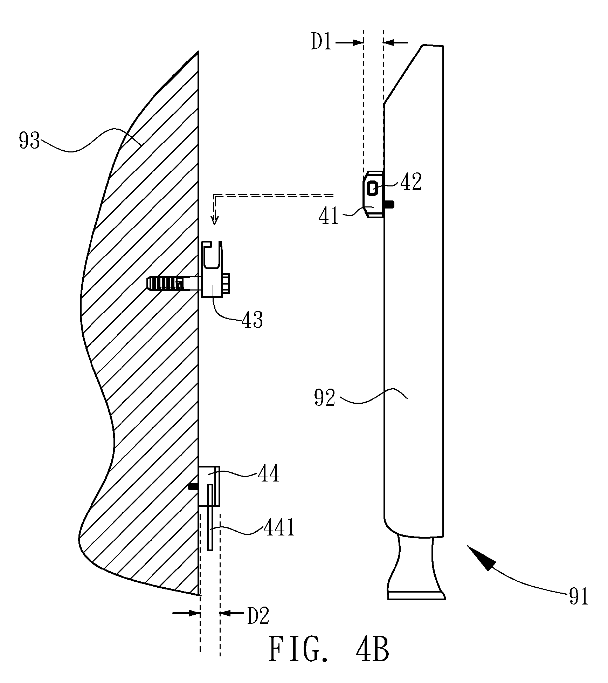

Please refer to Fig. 4A, Fig. 4A is diagram of display hanging structure according to the fourth embodiment of present invention. As shown in Fig. 4A, the display hanging structure includes three hangers 41, a shaft 42, two fixing blocks 43 and a spacer 44. Each fixing block 43 contains a slot 431 and a hook 432. Three hangers 41 are disposed in left end, right end and intermediate zone of the shaft 42. Three hangers 41 may significantly increase contact sites while hanging the comparative wider display 91, and as a result the display hanging structure can be more stable. In this embodiment, the spacer 44 is firmly disposed on the wall 93 and beneath the fixing block 43. The bracket 441 might rotate around the spacer 44 so as to be perpendicular to or parallel to the wall 93 by means of rotation. If the bracket 441 is opened, it could be perpendicular to the wall 93 and as a result abut upon the rear portion 92 of the display 91. Therefore, the display 91 might be tilted, so as to conveniently remove or plug wires and cables which are located behind the display 91. Then, please refer to Fig. 4B, the thickness D1 of the hanger 41 is equal to the thickness D2 of the spacer 44, as a result the thin-type configuration is absolutely achieved.

Summarily, the display hanging structure might resolve the shortcomings of thick and bulky frame of display. Moreover, it may improve regulation of the display and meliorate plug or remove of wires and cables. Therefore, the display hanging structure of the present invention may have tremendous market potential.

While certain exemplary embodiments have been described and shown in the accompanying drawings, it is to be understood that such embodiments are merely illustrative of and not restrictive on the broad invention, and that this invention is not be limited to the specific constructions and arrangements shown and described, since various other modifications may occur to those ordinarily skilled in the art.

## Claims

1. A display hanging structure for hanging a display on the wall, the display having a rear portion, the display hanging structure comprising:
at least two hangers disposed at rear portion and each hanger having a hole disposing at identical altitude comparative to the other hole;
a shaft with axial shape disposed in the holes;
at least one fixing block disposed on the wall and containing a slot for receiving the shaft;
whereby the display may be firmly stuck on the wall by means of placing the shaft in the slots.

2. The display hanging structure of claim 1, wherein the hanger is fixed on the rear portion of the display by means of screws or hooks.

3. The display hanging structure of claim 1, wherein the hangers are disposed at identical altitude.

4. The display hanging structure of claim 1, wherein the shaft is tightly fitted in the holes.

5. The display hanging structure of claim 1, wherein the shaft is tightly fitted in the slot.

6. The display hanging structure of claim 1, wherein the fixing block further contains at least one flexible hook disposing nearby the slot, wherein the hook might prevent the shaft from radial moving when the shaft is disposed in the slot.

7. The display hanging structure of claim 6, wherein the hook abuts upon the shaft when the shaft is disposed in the slot.

8. The display hanging structure of claim 1, wherein two ends of the slot along the direction of axis of the shaft are at identical altitude.

9. The display hanging structure of claim 1, wherein the number of fixing blocks is plurality and the pluralities of slots are at identical altitude.

10. The display hanging structure of claim 1, further comprising at least one spacer disposed at the rear portion and beneath of the hanger.

11. The display hanging structure of claim 10, wherein the thickness of the spacer and the thickness of the hanger are the same.

12. The display hanging structure of claim 10, wherein the spacer further contains a bracket rotating around the spacer, and the bracket is parallels to or perpendicular to the rear portion by means of rotation.

13. The display hanging structure of claim 1, further comprising at least one spacer disposed on the wall and beneath of the fixing block.

14. The display hanging structure of claim 13, wherein the thickness of the spacer and the thickness of the fixing block are the same.

15. The display hanging structure of claim 13, wherein the spacer further contains a bracket rotating around the spacer, and the bracket is parallels to or perpendicular to the wall by means of rotation.
